# EUROPÄISCHE PATENTANMELDUNG

(11) **EP 2 810 882 A1**
(43) Veröffentlichungstag der Anmeldung: **10.12.2014**
(21) Anmeldenummer: 13170642.6
(22) Anmeldetag: 05.06.2013
(51) Int. Cl.: B65B 59/00, B65G 15/44, B65G 15/50

(54) **Mehrzugbandeinrichtung und Verpackungsanlage**

(71) Anmelder: Multivac Sepp Haggenmüller GmbH & Co. KG, 87787 Wolfertschwenden (DE)
(72) Erfinder: Bergler, Peter, 87463 Probstried (DE)
(74) Vertreter: Grünecker, Kinkeldey, Stockmair & Schwanhäusser

(57) **Zusammenfassung**

Die Erfindung betrifft eine Mehrzugbandeinrichtung (20) mit wenigstens zwei Zugbändern (2, 3, 4) mit jeweils eigenen Antrieben (6, 8, 10), um eine Gruppe von Produkten (31) zu transportieren und dabei unterschiedliche Formate (F1, F2) beim Be- und Entladen der Mehrzugbandeinrichtung (20) bearbeiten zu können.

## Beschreibung

Die Erfindung bezieht sich auf eine Mehrzugbandeinrichtung (engl: race track conveyor) mit den Merkmalen des Anspruchs 1 sowie auf eine Verpackungsanlage mit den Merkmalen des Anspruchs 10.

Es sind aus der Praxis Mehrzugbandeinrichtungen bekannt, die bis zu drei Mehrzugbänder umfassen, die jeweils separat voneinander antreibbar sind, um jeweils eine Gruppe von Produkten zu transportieren. Damit kann beispielsweise ein Ausgleich zwischen zwei Anlagen, die in unterschiedlichen Arbeitstakten arbeiten oder eine unterschiedliche Anzahl von Produkten während eines Arbeitstaktes verarbeiten, erzeugt werden. Derartige Dreizugbänder weisen drei Achsen mit Antriebsrädern und Umlenkrollen auf, wobei an jeder Achse jeweils ein Antrieb angebracht ist, um jeweils ein Zugband mittels eines Antriebsrades auf dieser Achse anzutreiben. Solche Mehrzugbandeinrichtungen weisen den Nachteil auf, dass das Zugband, das durch die am Anfang der Transportstrecke angeordnete Achse angetrieben ist, schiebend betrieben wird, welches antriebstechnisch vor allem bei langen Transportstrecken ungünstig ist. Die Anordnung mittels drei Achsen führt zumindest an einer Achse zu einem Umschlingungswinkel von nur 90°. Dies bringt den Nachteil mit sich, dass wenige tragende Zähne an der Antriebsrolle wirken und dadurch entweder die Übertragung der Leistung begrenzt ist oder der Durchmesser der Antriebsrolle entsprechend groß gewählt werden muss.

Aufgabe der vorliegenden Erfindung ist es, eine Mehrzugbandeinrichtung für eine Verpackungsanlage zur Verfügung zu stellen, die die oben genannten Nachteile nicht aufweist.

Diese Aufgabe wird gelöst durch eine Mehrzugbandeinrichtung mit den Merkmalen des Anspruchs 1 bzw. eine Verpackungsanlage mit den Merkmalen des Anspruchs 10. Vorteilhafte Weiterbildungen der Erfindung sind in den Unteransprüchen angegeben.

Die erfindungsgemäße Mehrzugbandeinrichtung umfasst wenigstens zwei, vorzugsweise wenigsten drei Zugbänder und weist einen eigenen Antrieb für jedes Zugband auf. Sie zeichnet sich dadurch aus, dass alle Antriebe in einer Transportrichtung am Ende der Mehrzugbandeinrichtung angeordnet sind, um alle Zugbänder ziehend antreiben zu können und mit einem Umschlingungswinkel von annähernd 180° kleine Durchmesser für angetrieben Riemenräder trotz hoher Antriebsleistung einsetzen zu können. Dadurch kann die Mehrzugbandeinrichtung flach bauen und wird kostengünstig in ihrer Herstellung.

Besonders platzsparend wird eine Ausführungsform, in der für jedes Zugband mindestens ein Antriebsrad oder Riemenrad vorgesehen ist, und wobei die Antriebs- oder Riemenräder mehrerer oder aller Zugbänder um eine gemeinsame Drehachse drehbar sind. Bei dieser gemeinsamen Drehachse könnte es sich um eine Umlenkachse der Zugbänder am stromabwärts gelegenen Ende der Mehrzugbandeinrichtung handeln.

Vorzugsweise sind für jedes Zugband zwei Riemen vorgesehen, um eine Vielzahl von Spuren mit Produkten bearbeiten zu können und somit die Leistung zu steigern. Bevorzugt sind die beiden Riemen jedes Zugbands rechts und links neben der Spur von Produkten auf diesem Zugband angeordnet.

Dabei ist es besonders vorteilhaft, wenn ein Umschlingungswinkel von Riemen der Zugbänder an allen angetriebenen Riemenrädern wenigstens 160°, bevorzugt wenigstens 170° bzw. annähernd 180° beschränkt, um hohe Antriebsleistungen bei möglichst kleinen Durchmessern der Riemenräder zu übertragen. Zusätzliche Spannrollen sind nicht als Riemenräder im Sinne der Erfindung interpretierbar.

Bevorzugt weist ein erstes Format beim Aufnehmen von Produkten auf die Mehrzugbandeinrichtung eine zu einem zweiten Format beim Abnehmen von den Produkten von der Mehrzugbandeinrichtung unterschiedliche Anzahl von Spuren und/oder Reihen auf. Die Mehrzugbandeinrichtung ist dazu konfiguriert, während des Transports der Produkte eine Formatänderung vorzunehmen, also die räumliche Anordnung der Produkte des Formats zu ändern. Somit kann eine Gruppe von Produkten, die auf die Mehrzugbandeinrichtung aufgelegt werden, unterschiedlich zu einer Gruppe von diesen Produkten sein, die von der Mehrzugbandeinrichtung abgenommen werden.

In einer besonders vorteilhaften Ausführung entspricht eine Aufnahmekapazität jeweils eines Zugbandes einem Vielfachen sowohl des ersten als auch des zweiten Formats.

Jedes Mehrzugband weist bevorzugt zwei Riemen auf, die mit Vorschubbalken, die quer zur Transportrichtung ausgerichtet sind, verbunden sind. Die Vorschubbalken übernehmen die Funktion des Schiebens bzw. des Transportierens der Produkte.

Vorzugsweise ist wenigstens für zwei Zugbänder zwischen dem Antrieb und den Riemenrädern ein Getriebe vorgesehen, um mit einem Antrieb zwei Riemen jeweils eines Zugbandes antreiben zu können. Dabei ist das Getriebe vorzugsweise ein Zahnriemengetriebe mit Zahnriemen.

Eine erfindungsgemäße Verpackungsanlage umfasst eine Verpackungsmaschine, vorzugsweise eine Tiefziehverpackungsmaschine, und eine Mehrzugbandeinrichtung, wie sie zuvor beschrieben wurde.

In einer besonders vorteilhaften Ausführung ist die Mehrzugbandeinrichtung stromabwärts der Verpackungsmaschine angeordnet, um vereinzelte Packungen einer weiteren Verarbeitung zuzuführen. Dabei kann eine Formatänderung zwischen dem von der Verpackungsmaschine erzeugten Format, dies entspricht einer Gruppe von Verpackungen, in ein anderes benötigtes Format entsprechend der Mehrzugbandeinrichtung nachfolgenden Einrichtung erfolgen. Dabei können die Verpackungsmaschine und die nachfolgende Einrichtung unterschiedliche Arbeitstakte aufweisen.

Vorzugsweise sind eine erste und eine zweite Umsetzeinrichtung an der Mehrzugbandeinrichtung vorgesehen, um vollautomatisiert sowohl vereinzelte Packungen auf die Mehrzugbandeinrichtung zu übernehmen und auch wieder an eine nachfolgende Einrichtung zu übergeben. Vorzugsweise umfassen die Umsetzeinrichtungen jeweils wenigstens einen Roboter, der beispielsweise als Zweiachsroboter oder als Deltaroboter ausgeführt sein kann.

Denkbar ist auch eine Ausführung der Mehrzugbandeinrichtung, bei der Verpackungen während der Bewegung in Transportrichtung sich seitlich annähern, um beispielsweise bei einer nachfolgenden Kartonbeladung als Endverpackung Volumen einzusparen.

Im Folgenden wird ein vorteilhaftes Ausführungsbeispiel der Erfindung anhand einer Zeichnung näher erläutert. Im Einzelnen zeigen:
- Fig. 1: eine Dreizugbandeinrichtung nach dem Stand der Technik in einer Seitenansicht,
- Fig. 2: eine erfindungsgemäße Mehrzugbandeinrichtung als Dreizugbandeinrichtung in einer Seitenansicht,
- Fig. 3a: erfindungsgemäße Mehrzugbandeinrichtung in einer Draufsicht,
- Fig. 3b: eine seitliche Schnittansicht auf jeweils einen Riemen,
- Fig. 4: eine Ansicht der Mehrzugbandeinrichtung,
- Fig. 5: eine Ansicht der Antriebseinheit der Mehrzugbandeinrichtung und
- Fig. 6: eine erfindungsgemäße Verpackungsanlage.

Gleiche Komponenten sind in den Figuren durchgängig mit gleichen Bezugszeichen versehen.

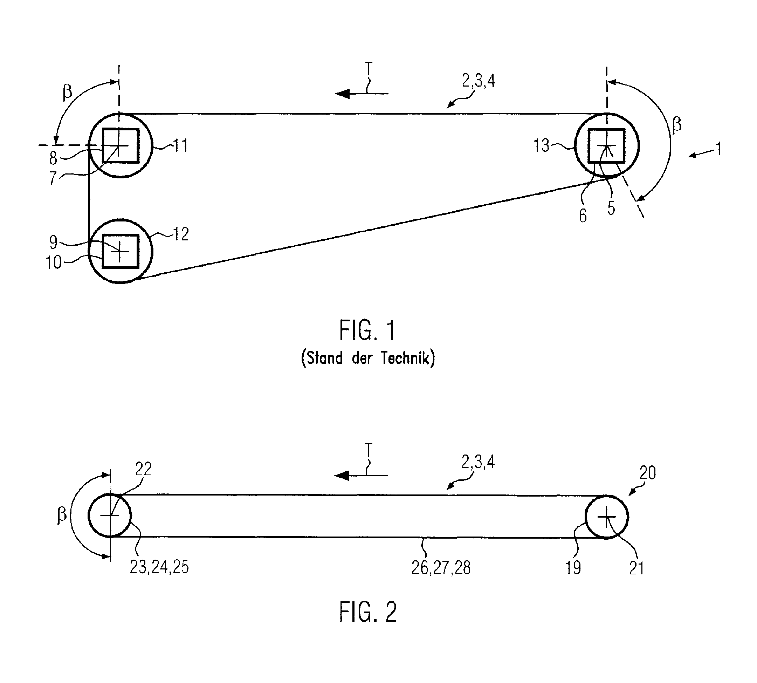

Fig. 1 zeigt eine Dreizugbandeinrichtung 1 nach dem Stand der Technik in einer Seitenansicht. Die Dreizugbandeinrichtung 1 ist dazu konfiguriert, Produkte in einer Transportrichtung T zu transportieren. Es sind drei Zugbänder 2, 3, 4 vorgesehen, die in der Zeichnungsebene hintereinander angeordnet sind. Ein erstes Zugband 2 an einer ersten Achse 5, die am vorderen Ende der Dreizugbandeinrichtung 1 vorgesehen ist, wird mittels eines ersten Antriebs 6, beispielsweise eines Servomotors, angetrieben. Das zweite Zugband 3 wird an einer zweiten Achse 7, die am hinteren Ende der Dreizugbandeinrichtung 1 vorgesehen ist, mittels eines zweiten Antriebs 8 angetrieben. Das dritte Zugband 4 wird an einer unterhalb der zweiten Achse 7 angeordneten dritten Achse 9 mittels eines dritten Antriebs 10 angetrieben. Somit sind alle drei Zugbänder 2, 3, 4 unabhängig voneinander antreibbar, wobei nur das zweite 3 und das dritte Zugband 4 ziehend betrieben werden. Das erste Zugband 2 wird schiebend betrieben. Der Umschlingungswinkel β, mit dem das zweite Zugband 3 mittels eines Riemenrads 11 auf der zweiten Achse 7 vom Antrieb 8 angetrieben wird, ist 90°. Der Umschlingungswinkel β des dritten Zugbands 3 an einem weiteren Riemenrad 12 ist nur geringfügig größer und der Umschlingungswinkel β des ersten Zugbands 2 an einem vorderen Riemenrad 13 ist deutlich kleiner als 180°.

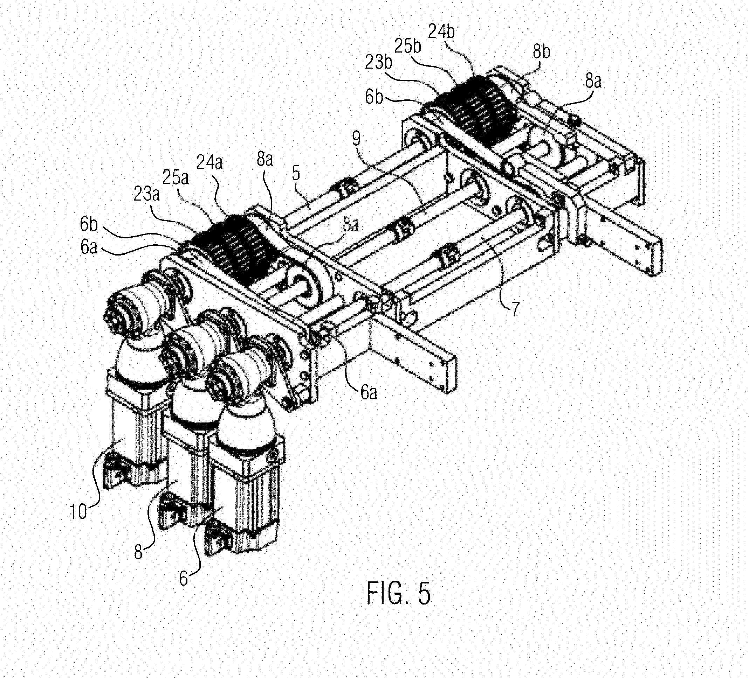

Im direkten Vergleich zur Fig. 1 zeigt die Fig. 2 eine erfindungsgemäße Mehrzugbandeinrichtung 20, bei der nur zwei Achsen 21, 22 vorgesehen sind. An dem in der Zeichnung rechts befindlichen Beginn der Mehrzugbandeinrichtung 20 angeordneten Achse 21 sind lediglich Umlenkräder 19 für Riemen 26, 27, 28 der Zugbänder 2, 3, 4 vorgesehen. Die Riemenräder 23, 24, 25 zum Antreiben der Riemen 26, 27, 28 der drei Zugbänder 2, 3, 4 sind alle in Transportrichtung T am stromabwärts gelegenen Ende der Mehrzugbandeinrichtung 29 angeordnet. Die Ausführung der jeweiligen Antriebe wird in Fig. 5 näher erläutert. Im Unterschied zum Stand der Technik aus Fig. 1 ist in Fig. 2 gut erkennbar, dass durch die Anordnung von nur zwei Achsen 21, 22 die Umschlingungswinkel (β) einheitlich 180° sind und dadurch geringere Durchmesser bei gleicher Leistungsübertragung ermöglicht sind. Der Platzbedarf wird ebenso verringert.

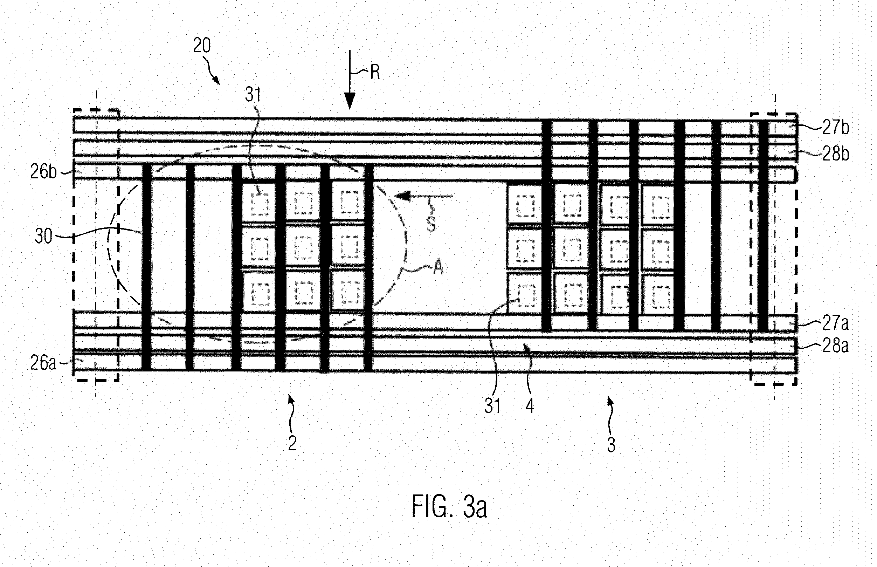

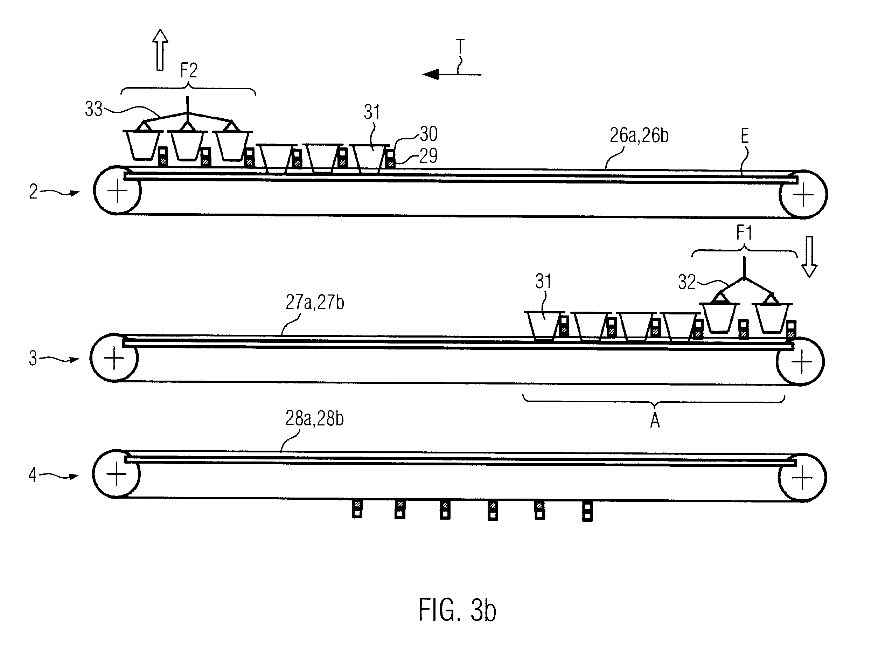

Anhand der Figuren 3a und 3b wird die Funktionsweise der Mehrzugbandeinrichtung 20 erläutert. Fig. 3a zeigt in der Draufsicht schematisch das erste Zugband 2 und das zweite Zugband 3, wobei die Zugbänder 2, 3 jeweils zwei Riemen 26a, 26b, 27a, 27b aufweisen, die jeweils gemeinsam angetrieben werden. Entsprechend weist durch das dritte Zugband 4 zwei Riemen 28a, 28b auf. Am Beispiel des ersten Zugbands 2 ist gezeigt, dass die Riemen 26a, 26b an ihrer Außenseite eine Gruppe von Mitnehmern 29 (siehe Figur 3a), die in einem regelmäßigen Abstand voneinander angeordnet sind, aufweisen. Mittels Vorschubbalken 30, die senkrecht zur Transportrichtung T ausgerichtet sind und auf Mitnehmern 29 beider Riemen 26a, 26b angebracht sind, können Produkte 31 wie Packungen transportiert werden. Dabei schieben die Vorschubbalken 30 eine Gruppe von Produkten 31 in Transportrichtung T, nachdem diese am vorderen Ende der Mehrzugbandeinrichtung 20 eingelegt wurden. Die Gruppe von Produkten 31 jeweils eines Zugbands 2, 3, 4 wird als Aufnahmekapazität A definiert.

Fig. 3b zeigt das zweite Zugband 3 in einer Einlegeposition zur Aufnahme der Produkte 31 in einem ersten Format F1 mittels eines Roboters 32. Das erste Zugband 2 befindet sich derweil in einer Entladeposition zur Abnahme der Produkte 31 von der Mehrzugbandeinrichtung 20, in der ein weiterer Roboter 33 die Produkte 31 in einem zweiten Format F2 abnimmt. Das dritte Zugband (4) befindet sich in einer Bewegung hin zur Einlegeposition. Während der Vorschubbewegung liegen die Produkte 31 mit ihrer Unterseite auf einer Transportebene E auf.

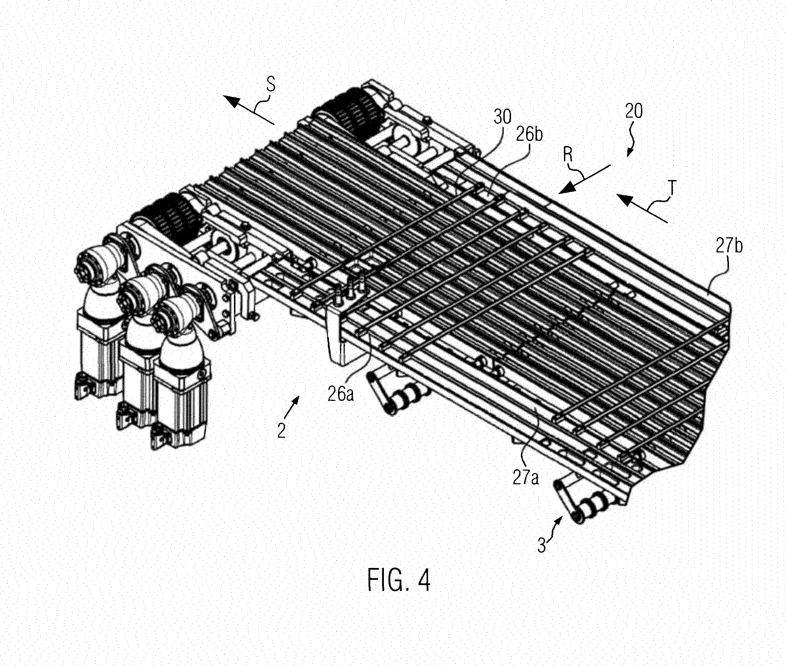

Fig. 4 zeigt eine schematische Teilansicht einer achtspurigen Mehrzugbandeinrichtung 20 mit zwei Riemen 26a, 26b für ein erstes Zugband 2 und zwei Riemen 27a, 27b für ein zweites Zugband 3. Beide Riemen 26a, 26b, 27a, 27b des jeweiligen Zugbands 2, 3 sind mit jeweils sechs Vorschubbalken 30 verbunden, die zusammen eine Aufnahmekapazität A von 48 bzw. 8 x 6 Produkten 31 als ein gemeinsames Format transportieren. Spuren S eines Formats sind in der Transportrichtung T und Reihen R eines Formats orthogonal dazu ausgerichtet. Ein "Format" wird dabei gebildet aus einer Gruppe von Produkten 31 in n Spuren und m Reihen, wobei n und m ganzzahlig sind. Denkbar sind hierbei jede Zahl von Spuren S und Reihen R und somit verschiedenste Formate bzw. Aufnahmekapazitäten A. Zur besseren Darstellung der Zugbänder 2, 3 sind die Riemen 26a, 26b, 27a, 27b lediglich im Bereich der Vorschubbalken 30 dargestellt. Denkbar sind auch Führungen, die in Transportrichtung ausgerichtet sind, um die Produkte 31 in der jeweiligen Spur S zu führen. Dabei können sich benachbarte Spuren S zueinander annähern, um einen seitlichen Abstand zwischen benachbarten Produkten 31 zu verringern. Beispielsweise kann so eine Überlappung von entsprechend gestalteten Verpackungen 31 erzeugt werden, die vom weiteren Roboter 33 in dieser Lage in einen Karton eingelegt werden.

In Fig. 5 ist die Anordnung der drei Antriebe 6, 8, 10 für die drei Zugbänder 2, 3, 4 dargestellt. Auf der zweiten Achse 22 sind alle angetriebenen Riemenräder 23a, 23b, 24a, 24b, 25a, 25b angeordnet. Die zwei Riemenräder 25a, 25b für das dritte Zugband 4 sind auf der zweiten Achse 22 drehfest fixiert und die Achse 22 wird vom dritten Antrieb 10 angetrieben. Die weiteren Riemenräder 23a, 23b, 24a, 24b sind auf der zweiten Achse 22 drehbar gelagert. Der erste Antrieb 6 weist ein Getriebe, vorzugsweise ein Zahnriemengetriebe auf und treibt dabei eine dritte Achse 7 an, auf der zwei Riemenräder 6a fixiert sind, die über einen Zwischenriemen 6a weitere zwei Getrieberiemenräder 6a antreiben. Dabei sind diese Getrieberriemenräder 6a mit den Riemenrädern 23a, 23b für das erste Zugband 2 fest miteinander verbunden.

Analog dazu treibt ein zweiter Antrieb 8 eine vierte Achse 9 an, auf der zwei Getrieberiemenräder 8a fixiert sind, die über einen Zwischenriemen 8b, vorzugsweise einen Zahnriemen, weitere zwei Getrieberiemenräder 8a antreiben. Dabei sind diese Getrieberiemenräder 8a mit den Riemenrädern 25a, 25b für das zweite Zugband 3 fest miteinander verbunden. Ein Getriebe umfasst also jeweils zwei Getrieberiemenräder 6a bzw. 8a sowie einen Zahnriemen und ist in diesem Ausführungsbeispiel ein Zahnriemengetriebe.

Diese Ausführung sorgt dafür, dass alle drei Zugbänder 2, 3, 4 am Ende der Mehrzugbandeinrichtung 20 ziehend angetrieben werden und dabei eine Ausführung mit Riemenrädern mit kleinen Durchmessern und einem Umschlingungswinkel β von 180° ermöglichen. Ebenso sind zwei, vier oder mehr Zugbänder auf diese Art realisierbar und von der Erfindung umfasst. Die Riemen 26a, 26b, 27a, 27b, 28a, 28b werden über individuelle Umlenkrollen 19 an einer Achse 21, die am Anfang der Mehrzugbandeinrichtung 20 angeordnet ist, umgelenkt. Eine Riemenspannung kann über die Umlenkrollen 19 oder durch weitere vorgesehen bekannte Spannrollen ausgeführt sein. Alle Riemenbänder sind in diesem Ausführungsbeispiel um dieselbe Drehachse 22 drehbar.

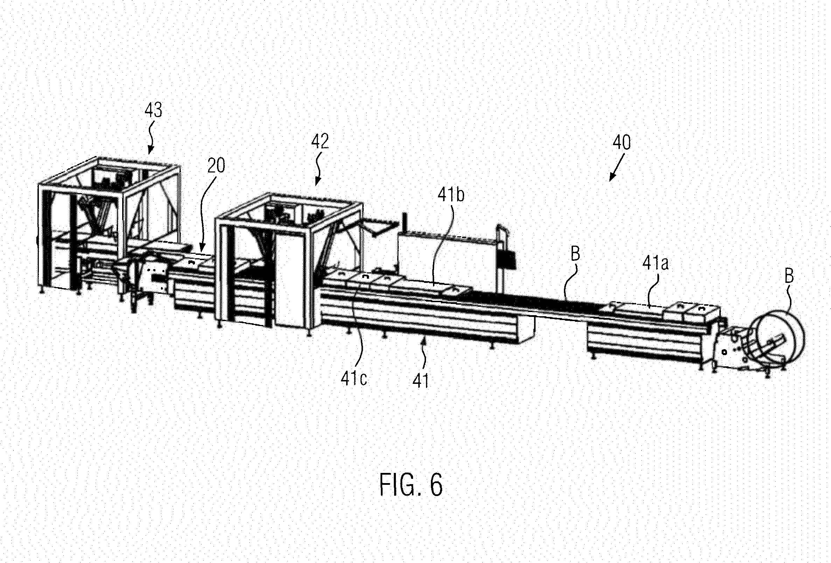

Fig. 6 zeigt eine erfindungsgemäße Verpackungsanlage 40, die eine Tiefziehverpackungsmaschine 41, eine erste Umsetzeinrichtung 42, eine Mehrzugbandeinrichtung 20 und eine zweite Umsetzeinrichtung 43 umfasst. Im Folgenden wird die Funktionsweise der Verpackungsanlage 40 näher erläutert.

Die intermittierend arbeitende Tiefziehverpackungsmaschine 40 formt in einer Formstation 41a Mulden in eine Folienbahn B. In diese Mulden werden Produkte eingelegt und in einer Siegelstation 41 b mittels einer weiteren Folienbahn versiegelt und in einer Schneidstation 41 c derart vereinzelt, dass bei jedem Arbeitstakt ein erstes Format F1 bzw. eine Gruppe von Packungen 31 am Ende der Tiefziehverpackungsmaschine 40 für die erste Umsetzeinrichtung bereitgestellt wird. Ein Format besteht beispielsweise aus acht Reihen R und acht Spuren S und somit aus vierundsechzig Packungen 31, die mittels einem oder mehrerer Roboter 32 der ersten Umsetzeinrichtung 42 auf ein erstes Zugband 2 umgesetzt werden. Jedes Zugband 2, 3, 4 der Mehrzugbandeinrichtung 20 hat in diesem Beispiel eine Aufnahmekapazität A von vierzig Reihen und acht Spuren, und somit dreihundertzwanzig Packungen. Sobald nach mehreren Arbeitstakten der Tiefziehverpackungsmaschine 41 und mehrfachem Umsetzen 31 der Packungen von der Tiefziehverpackungsmaschine 41 auf die Mehrzugbandeinrichtung 20 das erste Zuband 2 komplett mit Produkten 31 gefüllt ist, wird es mittels des ersten Antriebs 6 ans Ende der Mehrzugbandeinrichtung 20 bewegt.

Dort werden die Packungen 31 mittels der zweiten Umsetzeinrichtung 43 aufgenommen und beispielsweise in einen Karton eingelegt. Da das zweite Format F2 eines Kartons mit fünf Reihen R und acht Spuren S aufweisen kann, arbeitet die zweite Umsetzeinrichtung 43 in einem zur ersten Umsetzeinrichtung 42 unterschiedlichen Arbeitstakt. Während die zweite Umsetzeinrichtung 43 Packungen 31 des ersten Zugbands 2 entnimmt, kann die erste Umsetzeinrichtung 42 von der Tiefziehverpackungsmaschine 41 neu hergestellte Packungen 31 abnehmen und auf das inzwischen bereitgestellte zweite Zugband 3 einlegen. Das dritte Zugband 4 ohne Packungen befindet sich derweil auf dem Rückweg von der zweiten Umsetzeinrichtung 43 zur ersten Umsetzeinrichtung 42. Eine solche Anordnung ermöglicht einen kontinuierlichen Betrieb der Verpackungsanlage 40 trotz unterschiedlicher Formate F1, F2, die zum einen von der Tiefziehverpackungsmaschine 41 bereitgestellt und zum anderen im Karton endverpackt werden. Dadurch kann eine maximale Leistung und Auslastung der einzelnen Anlagenkomponenten, im Speziellen von Robotern der Umsetzeinrichtungen 42, 43 erreicht werden.

Es ist auch eine Ausführung denkbar, bei der ein Mehrzugband 20 entlang einer Einlegestrecke einer Tiefziehverpackungsmaschine 41 angeordnet ist, um mit einer Umsetzeinrichtung Produkte von der Mehrzugbandeinrichtung 20 in die Tiefziehverpackungsmaschine 41 bzw. in die Mulden einzulegen.

## Patentansprüche

1. Mehrzugbandeinrichtung (20), umfassend wenigstens zwei Zugbänder (2, 3, 4) und einen eigenen Antrieb (6, 8, 10) für jedes Zugband (2, 3, 4), **dadurch gekennzeichnet, dass** alle Antriebe (6, 8, 10) in einer Transportrichtung (T) am stromabwärts gelegenen Ende der Mehrzugbandeinrichtung (20) angeordnet sind.

2. Mehrzugbandeinrichtung nach Anspruch 1, **dadurch gekennzeichnet, dass** für jedes Zugband (2, 3, 4) mindestens ein angetriebenes Riemenrad (23, 24, 25) vorgesehen ist, und dass die Riemenbänder (23, 24, 25) für mehrere Zugbänder (2, 3, 4) oder sogar die Riemenräder (23, 24, 25) für alle Zugbänder (2, 3, 4) um eine gemeinsame Drehachse (22) drehbar sind.

3. Mehrzugbandeinrichtung nach einem der vorangehenden Ansprüche, **dadurch gekennzeichnet, dass** für jedes Zugband (2, 3, 4) zwei Riemen (26a, 26b, 27a, 27b, 28a, 28b) vorgesehen sind.

4. Mehrzugbandeinrichtung nach Anspruch 3, **dadurch gekennzeichnet, dass** ein Umschlingungswinkel (β) von Riemen (26a, 26b, 27a, 27b, 28a, 28b) der Zugbänder (2, 3, 4) an allen angetriebenen Riemenrädern (11a, 11b, 12a, 12b, 13a, 13b) wenigstens 160° beträgt.

5. Mehrzugbandeinrichtung nach einem der Ansprüche 3 oder 4, **dadurch gekennzeichnet, dass** jedes Zugband (2, 3, 4) zwei Riemen (26a, 26b, 27a, 27b, 28a, 28b) aufweist, die mit Vorschubbalken (30), die quer zur Transportrichtung (T) ausgerichtet sind, verbunden sind.

6. Mehrzugbandeinrichtung nach einem der vorangehenden Ansprüche, **dadurch gekennzeichnet, dass** die Mehrzugbandeinrichtung (20) konfiguriert ist zum Ändern eines ersten Formats (F1) beim Aufnehmen von Produkten (31) auf die Mehrzugbandeinrichtung (20) zu einem zweiten Format (F2) beim Abnehmen von den Produkten (31) von der Mehrzugbandeinrichtung (20) mit einer im Vergleich zum ersten Format (F1) unterschiedlichen Anzahl von Spuren (S) und/oder Reihen (R).

7. Mehrzugbandeinrichtung nach Anspruch 6, **dadurch gekennzeichnet, dass** eine Aufnahmekapazität (A) jeweils eines Zugbandes (2, 3, 4) einem Vielfachen sowohl des ersten (F1) als auch des zweiten Formats (F2) entspricht.

8. Mehrzugbandeinrichtung nach einem der vorangehenden Ansprüche, **dadurch gekennzeichnet, dass** wenigstens für ein Zugband (2, 3) zwischen dem Antrieb (6, 8) und den Riemenrädern (11a, 11 b, 12a, 12b) ein Getriebe vorgesehen ist.

9. Mehrzugbandeinrichtung nach Anspruch 8, **dadurch gekennzeichnet, dass** das Getriebe ein Zahnriemengetriebe mit einem Zahnriemen (6b, 8b) ist.

10. Verpackungsanlage (40), umfassend eine Verpackungsmaschine (41), vorzugsweise eine Tiefziehverpackungsmaschine, und eine Mehrzugbandeinrichtung (20) nach einem der vorangehenden Ansprüche.

11. Verpackungsanlage nach Anspruch 10, **dadurch gekennzeichnet, dass** die Mehrzugbandeinrichtung (20) stromabwärts der Verpackungsmaschine (41) angeordnet ist.

12. Verpackungsanlage nach Anspruch 10 oder 11, **dadurch gekennzeichnet, dass** eine erste (42) und eine zweite Umsetzeinrichtung (43) an der Mehrzugbandeinrichtung (20) vorgesehen sind.
